# EUROPEAN PATENT SPECIFICATION

(11) **EP 1 765 953 B1**
(45) Date of publication and mention of the grant of the patent: **06.10.2010**
(21) Application number: 05717817.0
(22) Date of filing: 28.02.2005
(51) Int. Cl.: C09K 5/04

(54) **REFRIGERANT COMPOSITION**
KÜHLMITTELZUSAMMENSETZUNG
COMPOSITION REFRIGERANTE

(30) Priority: 27.02.2004 GB 0404343
(43) Date of publication of application: 28.03.2007
(73) Proprietor: RPL HOLDINGS LIMITED, Hale Altrincham Cheshire WA15 9ST (GB)
(72) Inventor: POOLE, John Edward, Altrincham, Cheshire WA15 9ST (GB); POWELL, Richard, Bunbury, Cheshire CW6 9NW (GB)
(74) Representative: Browne, Robin Forsythe
(86) International application number: PCT/GB2005/000737
(87) International publication number: WO 2005/083028

(56) References cited:
- EP-A- 0 779 352
- US-A1- 2004 026 655
- US-B1- 6 526 764
- US-B1- 6 629 419
- US-B1- 6 783 691

## Description

This invention relates to refrigerant compositions which have no adverse effect on stratospheric ozone and to compositions which are for use both in refrigeration and air conditioning systems designed to use Ozone Depleting Substances (ODS) CFC12 (dichlorodifluoromethane), CFC502 (azeotrope of chloropentafluoromethane and chlorodifluoromethane)) and HCFC22 (chlorodifluoromethane) and additionally in new equipment. These new refrigerant compositions are compatible with lubricants commonly found in refrigeration and air conditioning systems.

The compositions may also be used in equipment designed for non ozone depleting substances.

It is well known that chlorofluorocarbons (CFCs) such as CFC12 and CFC502 and hydrochlorofluorocarbons such as HCFC22 while being energy efficient, non flammable and of low toxicity migrate to the stratosphere where they are broken down by ultra violet light to attack the ozone layer. These Ozone Depleting Substances are in the process of being replaced by non ozone depleting alternatives such as hydrofluorocarbons (HFCs) which are also non flammable, efficient and of low toxicity. There are six main HFCs, namely HFC134a, HFC32, HFC125, HFC143a, HFC227ea and HFC152a, which either individually or blended into mixtures can replace CFCs and HCFCs. While HFC134a, HFC227ea and HFC152a can be used to replace ODS directly, HFC32, HFC143a, and HFC125 are generally found in blends as replacements for ODS.However, HFCs do not have adequate solubility in traditional lubricants such as mineral and alkylbenzene oils so that synthetic oxygen containing lubricants have been introduced specifically for new equipment. These new lubricants are expensive and hygroscopic.

Refrigerant blends such as R404A, R507, R410A, R407C and others have been commercialised as replacements for CFCs and HCFCs but, because these compositions contain only HFC components, they cannot be used with the traditional lubricants commonly found in use with CFCs and HCFCs. If these blends are to be used to replace CFCs and HCFCs in existing equipment, the major chemical manufacturers recommend that no more than 5% of the -traditional lubricant in the system be retained so that a virtual complete change of lubricant to a synthetic oxygen containing lubricant resulting in a full retrofit is required, which is often costly and technically unsatisfactory..

Although equipment manufacturers have adapted their units to operate with HFC blends, they do not always find the commercially available products as satisfactory as the CFCs and HCFCs that these new refrigerants are replacing. In particular to ensure adequate oil return, hydrocarbon lubricants, such as mineral oil, have been replaced by oxygen containing lubricants, notably polyol esters and polyalkylene glycols. Unfortunately these materials are liable to absorb atmospheric moisture, especially during maintenance, which can contribute to excessive corrosion and wear in equipment thus reducing its reliability. A key objective of this patent is to provide HFC/hydrocarbon blends that enable the continued use of hydrocarbon oils in both existing and new equipment.

Additionally some refrigerants, such as R07C, have wide temperature glides (> 4°C) in the evaporator and condenser, whereas equipment manufacturers, based on their experience with CFC/HCFC single fluids or azeotropes, prefer refrigerants with low glides. A further key objective of this invention, therefore, is to provide HFC/hydrocarbon blends that can substitute for CFC 12, HCFC 22 and azotrope 502 (CFC 115/HCFC 22) both allowing the continued use of hydrocarbon lubricants in equipment and minimising the temperature glides in the heat exchangers.

The present invention relates to refrigerant compositions, which are non flammable under all conditions of fractionation as defined under ASHRAE Standard 34, and which can be used to replace ODS in an existing unit without the need to change the lubricant or make any significant change to the system hardware. In new equipment the refrigerant compositions allow the continued use of hydrocarbon oils, although the manufacturers may take the opportunity to modify their units to optimise the performances of the new refrigerants, for example by selecting the most appropriate lengths of capillary tubes. Where the ingress of moisture or other problems are being experienced with oxygen containing oils the new compositions allow such oils to be replaced by hydrocarbon oils

It is known in the art that the addition of a small amount of hydrocarbon to a refrigerant composition containing an HFC or HFC mixtures can result in sufficient hydrocarbon being dissolved in the lubricant to be transported around the system so that lubrication of the compressor is maintained at all times. It is obvious that the greater the hydrocarbon content of the composition the greater the ability of the refrigerant to transport the lubricant back to the compressor. However, too high a hydrocarbon content can lead to flammable mixtures. Although flammable refrigerants are acceptable in some applications, this invention relates to non flammable compositions for use in equipment where flammable refrigerants are prohibited. However, it is not well understood how to achieve non flammable compositions under all conditions including fractionation of the refrigerant compositions which can take place during a leak of the refrigerant from the system or during storage.

Not all HFCs are non flammable as defined under ASHRAE Standard 34. HFC143a and HFC32 have not received a non flammable rating by ASHRAE. This invention relates to compositions of refrigerants which not only covers blends of non flammable HFCs with hydrocarbons but also blends of flammable HFCs, non flammable HFCs and hydrocarbons in selected proportions such that all such compositions are non flammable during fractionation while providing similar refrigerating effects and thermodynamic performances as the ODS they replace, namely CFC12, CFC502 and HCFC22.

While this invention relates to refrigerant compositions which can be used with traditional lubricants such as mineral and alkylbenzene oils, they are also suitable for use with synthetic oxygen containing lubricants.

In formulating HFC/hydrocarbon blends to replace CFC 12, CFC 502 and HCFC 22 in specific applications it is generally necessary to use one or more lower boiling HFCs, with one or more higher boiling HFCs. In this context preferred lower boiling HFCs are HFC 32, HFC 143a and HFC 125, and higher boiling HFCs are HFC 134a, HFC 134, HFC 227ea and HFC 152a.

To avoid flammability in the blend, or in a fraction generated by a leak, for example as defined by ASHRAE Standard 34, the total amount of hydrocarbon should be minimised. At the same time the quantity of the hydrocarbon mixture dissolved in the oil needs to be maximised for good oil return, especially at those locations in the circuit where the oil is at its most viscous, for example the evaporator. A single higher boiling hydrocarbon, such as pentane or *iso*-pentane, would certainly show higher solubility in the oil than a lower boiling hydrocarbon. However, as the result of a leak, for example from a cylinder, a higher boiling hydrocarbon will concentrate in the liquid phase. The amount of hydrocarbon will, therefore, need to be limited in order to avoid generating a flammable mixture towards the end of the leak.

This problem could be avoided by using only a low boiling hydrocarbon such as propane or *iso*-butane. However, this has 2 disadvantages. Firstly, lower boiling hydrocarbons are less soluble than higher boiling hydrocarbons in hydrocarbon lubricants in the evaporator when present at similar weights % as formulated in the blend. Consequently they are less effective at ensuring good oil return. Secondly, because of their higher volatility they tend to concentrate in the vapour phase of a blend. Their concentration therefore needs to be restricted to avoid generating flammable mixtures at the beginning of a leak. This problem is exacerbated if the one or more of the lower boiling HFCs is also flammable.

Surprisingly we have found that the best approach to formulating HFC/HC refrigerant blends is to use combinations of two and preferably three hydrocarbons with different boiling points. This allows the total amount of hydrocarbon of the blend to be reduced while simultaneously the amount dissolved in the oil in the evaporator is increased.

This invention has the following advantage. Hydrocarbon components facilitate oil return, but, because of their flammability, restrict the weights of flammable HFCs, notably HFC 143a that can be included. Inclusion of these fluids can be valuable in achieving the required balance of thermodynamic properties, so minimising the amounts of hydrocarbon present allows more scope in formulating preferred blends.

The blending of HFCs to achieve the desired balance of physical properties appropriate to various cooling applications is well known and a variety of products are available commercially, for example R407C, R410A and R410B. Although these have been selected for specific applications in combination with oxygen containing synthetic lubricants, simply adding 2 or 3 hydrocarbon components to these products does not achieve the preferred products for use with hydrocarbon lubricants. Firstly, the hydrocarbon components contribute to the overall thermodynamic properties of the blend so will affect the preferred ratios of the HFCs. Secondly, the ratio of flammable to non-flammable HFCs will need to selected to ensure non-flammability, for example, as required by the ASHRAE 34 Standard.

Blends of HFC125, HFC134a, HFC143a, HFC227ea are particularly preferred as replacements for CFCs and HCFCs. Both HFC125 (pentafluoroethane) and R227ea are non flammable under all operating conditions and in addition are fire suppressants, an application for which they have been developed by the fire fighting industry. The presence of HFC227ea provides a twofold advantage of reducing the flammability of the composition and also enhances oil return to the compressor due to emulsification of the lubricant in the presence of a hydrocarbon.

Blends of HFC 1 34a, HFC227ea, HFC125 and mixtures of selected hydrocarbon additives have been found to be preferred replacements for CFC12 in centrifugal chillers. It has been found that the interaction of hydrocarbon additives in such mixtures facilitates non flammable mixtures during all conditions of leakage during fractionation so that non flammability can be achieved according to ASHRAE Standard 34. The presence of hydrocarbons results in the lubricant being returned to the compressor. The presence of R227ea enables the requisite molecular weight of the blend to match that of CFC12 and additionally facilitates non flammability due to its fire retardant properties. The presence of R125 increases the capacity of the blend. The resulting mixtures are a close match for CFC12 in thermodynamic and system performance.

Surprisingly it has been found that given the same percentage content of hydrocarbon additive in the refrigerant composition, increasing the HFC125 content of the composition results in flammable mixtures being created during fractionation. This is very surprising since it would seem obvious that the greater the amount of HFC125 in the composition the less would be the likelihood to generate a flammable mixture during fractionation The reasons for this apparent anomaly relate to the pressure/temperature relationship between the quantities of HFC125 and HFC134a in the mixture and the amount and type of hydrocarbon and/or hydrocarbon mixture. The following refrigerant compositions were made up and leaked away until the cylinder was almost liquid empty according to ASHRAE Standard 34:

| | % | |
|---|---|---|
| | Blend 1 | Blend 2 |
| R134a | 48.0 | 21.0 |
| R125 | 49.0 | 76.0 |
| butane | 2.7 | 2.5 |
| isopentane | 0.3 | 0.5 |

Blend 2 with the considerably higher HFC125 content was found to create a flammable composition during fractionation, while Blend 1 with a lower HFC125 content remained non flammable throughout fractionation.

In GC 2727427 N A Roberts teaches that, if a hydrocarbon with at least four carbon atoms other than methyl propane (isobutane) is used, surprisingly the flammability of the fractionated composition is greatly reduced. Surprisingly, we have now found that the inclusion of isobutane with appropriately chosen hydrocarbons does not result in flammable compositions during fractionation. It has been found that the selection of the hydrocarbon additive or mixtures thereof with the HFC components is critical to achieving non flammability under all operating conditions and as defmed under ASHRAE Standard 34.

In US5,800,730 it is stated that HFC 134a needs to be added to blends of HFC125 and HFC143a as a replacement for CFC502 in order to avoid a flammable mixture (example 3). Surprisingly we have found that by excluding HFC134a, changing the proportion of HFC125 to HFC143a and adding a selected range of hydrocarbons results in a composition which is non flammable during fractionation and a close match for R502 with regard to thermodynamic performance.

In US5,211.867, azeotropic compositions are claimed of R125 and R143a. It is a key feature of this invention that a specially selected hydrocarbon or mixtures of hydrocarbons are present in order to facilitate oil return to the compressor. Surprisingly it has been found that, despite the flammability of HFC143a, the selection of a hydrocarbon or mixtures of hydrocarbons enables the compositions to be non flammable during fractionation. The combination of a high boiling hydrocarbon such as isopentane (BP 27°C) with butane (BP -0.5°C) and isobutane (BP -11.5°C) avoids build up of hydrocarbon content in the liquid phase during a leakage while the more volatile isobutane is countered in the vapour phase by the fire suppressant HFC125 due to the latter's higher vapour pressure and lower boiling point (BP -45°C). In order for the composition to be non flammable, the HFC125 content of the composition is above the azeotropic composition so that the content of HFC143a is reduced but without affecting the refrigerating performance of the composition as a replacement for CFC502.

Although the addition of hydrocarbons to HFCs has been previously described, it has not been previously appreciated that the volatilities of the hydrocarbons need to be matched to the application for which the refrigerant is intended. For example R12 is employed as the refrigerant in domestic freezers with evaporating temperatures of ∼-22°C, in domestic fridges with evaporating temperatures of ∼-5°C, and in mobile air conditioning with evaporating temperatures of ∼5°C. An important aspect of this invention is to formulate HFC/HC blends that ensure good oil return in these disparate applications while also ensuring that the refrigerant blend remains non-flammable according to the chosen criterion. For applications with evaporators operating at temperatures above -5°C the higher boiling hydrocarbons are preferred. Specially preferred are isopentane, alone or mixed with butane. For applications with the evaporators operating in the range -20°C to -5°C mixtures of hydrocarbons containing a higher, an intermediate and a lower boiling point component are preferred. Especially preferred are blends containing isopentane, butane and isobutane. For evaporators operating below -20°C HC mixtures containing isobutane and butane are preferred with optionally some isopentane.

US-B-6629419 discloses refrigerant composition consisting of R134a, R125, isopentane and butane. EP-A-0779352 discloses compositions consisting of R134a, R125, butane and isobutane. US2004/026655 discloses refrigerant compositions comprising R134a, R227ea and R125 and a hydrocarbon US-B-6526764 discloses refrigerants comprising R32, R125, R134a and R143a.

According to the present invention a refrigerant composition which may find application as a replacement or substitute for R22 consists essentially of:

| | |
|---|---|
| R134a | 53.2 to 39% |
| R125 | 45 to 55% |
| isopentane | 0.6 to 1% |
| butane | 0.6 to 3% |
| isobutane | 0.6 to 2%. |

A particularly preferred consists essentially of:

| | |
|---|---|
| R134a | 47.5% |
| R125 | 50% |
| isopentane | 0.6% |
| butane | 1% |
| isobutane | 0.9%. |

In a first preferred embodiment the hydrocarbon is present in an amount of 0.6 to 4% and wherein the composition is non-flammable when completely in the vapour phase.

In a second preferred embodiment the hydrocarbon is present in an amount of 0.6 to 4% and wherein when the composition is in a container both vapour and liquid present, neither vapour nor liquid phase is flammable.

In a third preferred embodiment the hydrocarbon is present in an amount of 0.6 to 4% and wherein at any time during a leak from a vapour space in a container neither the liquid phase nor the vapour phase is flammable.

In a fourth preferred embodiment the hydrocarbon is present in amount of 0.6 to 4% and wherein at any time during a leak from a liquid space in a container neither the liquid phase nor vapour phase is flammable.

According to a fifth preferred embodiment the hydrocarbon is present in an amount of 0.6 to 4% and wherein the proportion of hydrocarbon to hydrofluorocarbon in the vapour phase does not differ from the equivalent proportion in the liquid phase by more than 40%, more preferably not by more than 30%, most preferably not by more than 20% at equilibrium at 25°C.

In a sixth preferred embodiment hydrocarbon is present in amount of 0.6 to 4% and wherein the proportion of hydrocarbon to hydrofluorocarbon in the vapour phase does not differ from the formulated composition by more than 40%, preferably by not more than 30%, most preferably by not more than 20% at equilibrium at 25°C.

In particularly preferred compositions in accordance with either the fifth or sixth preferred compositions above, during a leak from the vapour space or liquid space in a container, the proportion of hydrocarbon to hydrofluorocarbon in either of the vapour phase or the liquid phase does not differ from the formulated composition by more than 40%, more preferably by not more than 30%, most preferably by not more than 20% at equilibrium at 25°C.

Preferred compositions in accordance with this invention meet two or more of the criteria of the preferred embodiment.

The hydrocarbon component consists of a mixture of isopentane, butane and isobutane.

The amount of isopentane is preferably about 0.6 to 1%.

The amount of butane is preferably about 0.6 to 3%, most preferably about 0.6 to 2%.

The amount of isobutane is preferably about 0.6 to 2%, most preferably about 0.6 to 1%.

Percentages and other proportions referred to in this specification are by weight unless indicated otherwise and are selected to total 100% from within the ranges disclosed.

The invention is further described by means of example but not in a limitative sense.

### Replacement for R22 in Room Air Conditioning

### EXAMPLE

**Blends comprising fluids selected from R134a, R125, 600, 600a and 601a.**

The performances of various blends were evaluated in a typical static air conditioning cycle using the NIST CYCLE D program. The modelling conditions are given below.

| COOLING DUTY DELIVERED | 10 kW |
|---|---|
| EVAPORATOR | |
| Midpoint fluid evaporation temperature | 7.0°C |
| Superheating | 5.0°C |
| Suction line pressure drop (in saturated temperature) | 1.5°C |
| CONDENSER | |
| Midpoint fluid condensing temperature | 45.0°C |
| Subcooling | 5.0°C |
| Discharge line pressure drop (in saturated temperature) | 1.5°C |
| LIQUID LINE/SUCTION LINE HEAT EXCHANGER | |
| Efficiency | 0.3 |
| COMPRESSOR | |
| Electric motor efficiency | 0.85 |
| Compressor isentropic efficiency | 0.7 |
| Compressor volumetric efficiency | 0.82 |
| PARASITIC POWER | |
| Indoor fan | 0.3 kW |
| Outdoor fan | 0.4kW |
| Controls | 0.1kW |

The results of analysing the performances in an air-conditioning unit using these operating conditions are shown in the Table. For comparison the performances of R22 and R407C are also shown.

**Table - Replacements for R22 especially in fixed orifice expansion units**

| Refrigerant | R-22 | R407C | 1 | 2 | 3 | 4 | 5 |
|---|---|---|---|---|---|---|---|
| R134a wt% | | | 42.2 | 44.3 | 46.3 | 47.8 | 49.3 |
| R125 wt% | | | 55 | 53 | 51 | 49 | 48 |
| R601a | | | 0.8 | 0.9 | 0.6 | 0.8 | 1 |
| R600 | | | 0.8 | 1 | 1.4 | 1.5 | 1 |
| R600a | | | 1.2 | 0.8 | 0.7 | 0.9 | 0.7 |
| | | | | | | | |
| Discharge pressure (bar) | 17.91 | 19.30 | 16.05 | 15.78 | 15.64 | 15.37 | 15.27 |
| Discharge temperature (°C) | 104.7 | 92.5 | 78.3 | 78.6 | 78.7 | 78.9 | 79.1 |
| COP (system) | 2.49 | 2.47 | 2.48 | 2.48 | 2.49 | 2.49 | 2.49 |
| Capacity (kW/m3) | 3067 | 3172 | 2671 | 2635 | 2619 | 2580 | 2566 |
| Glide in evaporator (°C) | 0 | 4.8 | 4.0 | 4.1 | 3.7 | 3.9 | 4.1 |
| Glide in condenser (°C) | 0 | 4.7 | 3.8 | 3.9 | 3.7 | 3.9 | 4.0 |

## Claims

1. A refrigerant composition consisting by weight essentially of:
| | |
|---|---|
| R134a | 53.2 to 39% |
| R125 | 45 to 55% |
| isopentane | 0.6 to 1% |
| butane | 0.6 to 3% |
| isobutane | 0.6 to 2%. |

2. A refrigerant composition as claimed in claim 1 consisting essentially of:
| | |
|---|---|
| R134a | 47.5% |
| R125 | 50% |
| isopentane | 0.6% |
| butane | 1% |
| isobutane | 0.9%. |

3. A composition as claimed in any preceding claim wherein the composition is non-flammable when completely in the vapour phase; and
wherein when the composition is in a container with both vapour and liquid present; neither vapour nor liquid phase is flammable; and
wherein at any time during a leak from a vapour space in a container neither the liquid phase nor the vapour phase is flammable.

4. A composition as claimed in any preceding claim wherein the proportion of hydrocarbon to hydrofluorocarbon in the vapour phase does not differ from the equivalent proportion in the liquid phase by more than 40% at equilibrium at 25°C.

5. A composition as claimed in claim 4 wherein the proportion does not differ by more than 30%.

6. A composition as claimed in claim 4 wherein the proportion does not differ by more than 20%.

7. A composition as claimed in any preceding claim wherein the proportion of hydrocarbon to hydrofluorocarbon in the vapour phase does not differ from the formulated composition by more than 40% at equilibrium at 25°C.

8. A composition as claimed in claim 7 wherein the proportion does not differ by more than 30%.

9. A composition as claimed in claim 8 wherein the proportion does not differ by more than 20%.

10. A composition as claimed in any preceding claim wherein during a leak from the vapour space or liquid space of a container, the proportion of hydrocarbon to hydrofluorocarbon in either of the vapour phase or the liquid phase does not differ from the formulated composition by more than 40% at equilibrium at 25°C.

11. A composition as claimed in claim 10 wherein the proportion does not differ by more than 40%.

12. A composition as claimed in claim 11 wherein the proportion does not differ by more than 20%.

## Patentansprüche

1. Kältemittelzusammensetzung gewichtsmäßig im Wesentlichen bestehend aus:
| | |
|---|---|
| R134a | 53,2 bis 39% |
| R125 | 45 bis 55% |
| Isopentan | 0,6 bis 1% |
| Butan | 0,6 bis 3% |
| Isobutan | 0,6 bis 2%. |

2. Kältemittelzusammensetzung, wie in Anspruch 1 beansprucht, im Wesentlichen bestehend aus:
| | |
|---|---|
| R134a | 47,5% |
| R125 | 50% |
| Isopentan | 0,6% |
| Butan | 1% |
| Isobutan | 0,9%. |

3. Zusammensetzung, wie in einem der vorangehenden Ansprüche beansprucht, wobei die Zusammensetzung nichtbrennbar ist, wenn sie vollständig in der Dampfphase ist, und
wobei, wenn sich die Zusammensetzung in einem Behälter befindet, wobei sowohl Dampf als auch Flüssigkeit vorhanden ist, weder eine Dampf- noch eine Flüssigphase brennbar ist; und
wobei zu jeder Zeit während eines Lecks von einem Dampfraum in einem Behälter weder die Flüssigphase noch die Dampfphase brennbar ist.

4. Zusammensetzung, wie in einem der vorangehenden Ansprüche beansprucht, wobei sich das Verhältnis von Kohlenwasserstoff zu Fluorkohlenwasserstoff in der Dampfphase von dem gleichwertigen Verhältnis in der Flüssigphase nicht um mehr als 40% im Gleichgewicht bei 25°C unterscheidet.

5. Zusammensetzung, wie in Anspruch 4 beansprucht, wobei sich das Verhältnis nicht um mehr als 30% unterscheidet.

6. Zusammensetzung, wie in Anspruch 4 beansprucht, wobei sich das Verhältnis nicht um mehr als 20% unterscheidet.

7. Zusammensetzung, wie in einem der vorangehenden Ansprüche beansprucht, wobei sich das Verhältnis von Kohlenwasserstoff zu Fluorkohlenwasserstoff in der Dampfphase von der formulierten Zusammensetzung nicht um mehr als 40% im Gleichgewicht bei 25°C unterscheidet.

8. Zusammensetzung, wie in Anspruch 7 beansprucht, wobei sich das Verhältnis nicht um mehr als 30% unterscheidet.

9. Zusammensetzung, wie in Anspruch 8 beansprucht, wobei sich das Verhältnis nicht um mehr als 20% unterscheidet.

10. Zusammensetzung, wie in einem der vorangehenden Ansprüche beansprucht, wobei sich während eines Lecks von dem Dampfraum oder einem Flüssigkeitsraum eines Behälters das Verhältnis von Kohlenwasserstoff zu Fluorkohlenwasserstoff in entweder der Dampfphase oder der Flüssigphase von der formulierten Zusammensetzung nicht um mehr als 40% im Gleichgewicht bei 25°C unterscheidet.

11. Zusammensetzung, wie in Anspruch 10 beansprucht, wobei sich das Verhältnis nicht um mehr als 40% unterscheidet.

12. Zusammensetzung, wie in Anspruch 11 beansprucht, wobei sich das Verhältnis nicht um mehr als 20% unterscheidet.

## Revendications

1. Composition réfrigérante composée essentiellement, en poids, de :
| | |
|---|---|
| R134a : | 53,2% à 39% |
| R125 : | 45% à 55% |
| Isopentane : | 0,6% à 1% |
| Butane : | 0,6% à 3% |
| Isobutane : | 0,6% à 2%. |

2. Composition réfrigérante selon la revendication 1, composée essentiellement de :
| | |
|---|---|
| R134a : | 47,5% |
| R125 : | 50% |
| Isopentane : | 0,6% |
| Butane : | 1% |
| Isobutane : | 0,9% |

3. Composition selon l'une quelconque des revendications précédentes, laquelle composition est ininflammable lorsqu'elle se trouve complètement en phase gazeuse ; et
- laquelle composition, lorsqu'elle se trouve dans un conteneur dans lequel les phases gazeuses et liquides sont toutes les deux présentes, aucune des phases n'est inflammable; et
- lors d'une fuite depuis un espace occupé par la phase gazeuse dans un conteneur, ni la phase liquide ni la phase gazeuse ne sont à aucun moment inflammables.

4. Composition selon l'une quelconque des revendications précédentes, dans laquelle la proportion d'hydrocarbure au hydrofluorocarbure en phase gazeuse ne se différencie pas plus de 40% à l'équilibre à 25°C de son équivalent en phase liquide.

5. Composition selon la revendication 4, dans laquelle la proportion ne différencie pas plus de 30%.

6. Composition selon la revendication 4, dans laquelle la proportion ne se différencie pas plus de 20%.

7. Composition selon l'une quelconque des revendications précédentes, dans laquelle la proportion d'hydrocarbure au hydrofluorocarbure en phase gazeuse ne se différencie pas plus de 40% à l'équilibre à 25°C de la composition telle que formulée.

8. Composition selon la revendication 7, dans laquelle la proportion ne se différencie pas plus de 30%.

9. Composition selon la revendication 8, dans laquelle la proportion ne se différencie pas plus de 20%.

10. Composition selon l'une quelconque des revendications précédentes, dans laquelle pendant une fuite depuis un espace occupé par la phase gazeuse ou un espace occupé par la phase liquide, dans un conteneur, la proportion d'hydrocarbure au hydrofluorocarbure en phase gazeuse ou en phase liquide ne se différencie pas plus de 40% à l'équilibre à 25°C de la composition telle que formulée.

11. Composition selon la revendication 10, dans laquelle la proportion ne se différencie pas plus de 30%.

12. Composition selon la revendication 11, dans laquelle la proportion ne se différencie pas plus de 20%.
